# EUROPÄISCHE PATENTANMELDUNG

(11) **EP 1 388 835 A1**
(43) Veröffentlichungstag der Anmeldung: **11.02.2004**
(21) Anmeldenummer: 02017956.0
(22) Anmeldetag: 09.08.2002
(51) Int. Cl.: G09F 3/03, F16B 41/00

(54) **Plombierung für ein Gehäuse**

(71) Anmelder: Landis+Gyr AG, 6301 Zug (CH)
(72) Erfinder: Haller, Hans-Peter, 6330 Cham (CH)
(74) Vertreter: OK pat AG

(57) **Zusammenfassung**

Bei einer Plombierung für ein Gehäuse, insbesondere ein Zählergehäuse für Elektrizitätszähler, Gaszähler, Wärmezähler oder dergleichen, ist ein Plombierstift (1) vorgesehen, der eine Gehäuseöffnung (5) derart abdeckt, dass ein durch die Gehäuseöffnung (5) zugängliches Gehäusebefestigungselement (8) unbedienbar ist, wobei der Plombierstift (1) eine Sollbruchstelle (3) aufweist, die innerhalb der Gehäuseöffnung (5) sichtbar ist.

## Beschreibung

Die Erfindung betrifft eine Plombierung für ein Gehäuse, insbesondere ein Zählergehäuse für Elektrizitätszähler, Gaszähler, Wärmezähler oder dergleichen, die ein einfaches Erkennen einer Manipulation ermöglicht.

### Technologischer Hintergrund und Stand der Technik

Plombierungen sind allgemein bekannt. Ihre Verwendung soll den Kreis zugriffsberechtigter Personen zu geschützten Räumen oder Gehäusen einschränken. Darüber hinaus soll eine Manipulation unberechtigter Personen an einem geschützten Raum oder Gehäuse anhand einer zerstörten Plombierung erkennbar sein. Weist eine Plombierung Beschädigungen auf oder wurde sie gar entfernt, ist mit entsprechendem Mehraufwand der gesamte Raum bzw. das gesamte Gehäuse zu überprüfen und nicht nur die Plombierung selbst.

Neben der gewünschten Schutzeigenschaften ist eine wesentliche Voraussetzung einer guten Plombierung darin zu sehen, dass sie einfach zu überprüfen ist und sich eine etwaige Beschädigung dieser Plombierung dem Überprüfenden unmittelbar offenbart.

Eine derartige Plombierung ist in der US 4,733,983 beschrieben. Hierin wird ein oberes und ein unteres Verschlusselement gezeigt, wobei das untere Verschlusselement, in das das obere Verschlusselement einrastet, transparent ausgebildet ist. Auf diese Art sind die ineinander rastenden Federelemente und Schultern leicht überprüfbar, und es offenbart sich direkt eine unzulässige Manipulation der gesamten Plombiervorrichtung.

Allerdings ist diese herkömmliche Plombierung in vielfacher Hinsicht aufwendig ausgelegt. Schon alleine die mehrteilige Ausgestaltung dieser Plombierung für sich betrachtet unterstreicht die Herstellungsaufwendungen. Aber auch die Montage dieser Plombierung bedingt eine quasi feinmechanische und somit auch zeitintensive Handhabung.

### Darstellung der Erfindung

Es ist deshalb Aufgabe der Erfindung eine Plombierung der aufgezeigten Art dahingehend weiterzubilden, dass eine betrügerische Manipulation mit möglichst einfachen Mitteln verhindert wird und diese einfachen Mittel möglichst schnell und einfach auf ihre Schutzfunktion hin überprüfbar sind.

Diese Aufgabe wird erfindungsgemäss gelöst durch die Merkmale des Anspruchs 1.

Der Kern der Erfindung ist darin zu sehen, dass ein Plombierstift eine Gehäuseöffnung derart abdeckt, dass ein durch diese Gehäuseöffnung zugängliches Gehäusebefestigungselement unbedienbar ist, wobei der Plombierstift eine Sollbruchstelle aufweist, die innerhalb der Gehäuseöffnung sichtbar ist.

Die erfindungsgemässe Ausgestaltung der Plombierung verbindet in vorteilhafter Weise zum einen eine gegenüber dem Stand der Technik vergleichsweise einfache Herstellung eines einzigen Plombierelements, nämlich eines Plombierstifts, der darüber hinaus so geschickt mit seinem Installationsort zusammenwirkt, dass jedwede Manipulation - selbst eine Zerstörung und nachträgliche Reparatur- an dem Plombierstift sichtbar ist.

Einfacher ausgedrückt: Die am Plombierstift vorgesehene Sollbruchstelle ist so geschützt und einsehbar, dass sie nicht zerstört und repariert werden kann, ohne dass es unmittelbar einer prüfenden Person auffallen würde. Der prüfenden Person offenbart sich somit eine Art Überwachungsfenster, in den die Sollbruchstelle geschützt angeordnet ist.

Weitere vorteilhafte Ausgestaltungen sind Gegenstand der abhängigen Ansprüche 2 bis 9.

Ein vorteilhafte Ausgestaltung der Plombierung sieht eine Bohrung in einer Seitenwand der Gehäuseöffnung vor, durch die ein Plombierstift einsetzbar ist. Auf der eine Seite der Bohrung weist der Plombierstift dann einen Stiftkopf auf und auf der anderen Seite der Bohrung die Sollbruchstelle und die Plombierung.

Mit Vorteil ist der Plombierstift aus einem transparenten Kunststoff hergestellt, so dass durch das oben erwähnte Überwachungsfenster neben dem Plombierstift auch das durch ihn abgedeckte Gehäusebefestigungselement durch in Augenscheinnahme kontrolliert werden kann.

Darüber hinaus ist von Vorteil, wenn die plastische Verformung bzw. Plombierung eine Prägestempelung mit Prüfdatum und/oder Kennung einer Prüfbehörde aufweist.

### Kurze Darstellung der Zeichnung

In der Zeichnung ist ein Ausführungsbeispiel der Erfindung vereinfacht dargestellt. Es zeigt:
- Fig. 1: eine perspektivische Schnittdarstellung einer erfindungsgemässen Plombierung;
- Fig. 2: eine weitere Darstellung der Plombierung, und
- Fig. 3: eine Darstellung eines fixierten Plombierstifts.

Im folgenden wird die Erfindung anhand der Zeichnung detailliert erörtert. Dabei ist anzumerken, dass die Erfindung keinesfalls auf die Darstellung in dieser Zeichnung zu reduzieren ist.

### Wege zur Ausführung der Erfindung

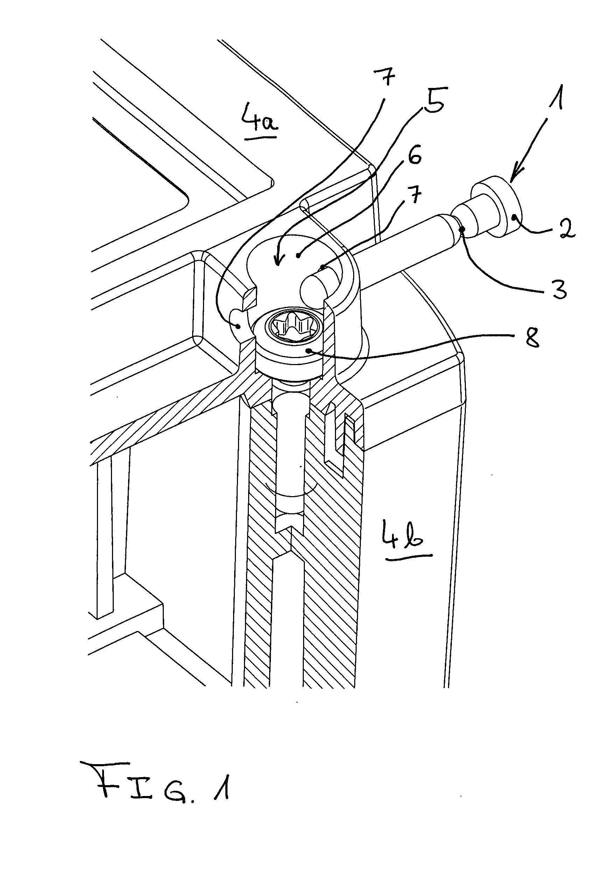

Fig. 1 zeigt in einer perspektivischen Schnittdarstellung eine erfindungsgemässe Plombierung, die ein oberes Gehäuseteil 4a gegen unbefugtes Trennen von einem unteren Gehäuseteil 4b schützt. Das obere Gehäuseteil 4a ist mit dem unteren Gehäuseteil 4b mittels einer Schraube 8 verschraubt. Die Schraube 8 ist im oberen Gehäuseteil 4a in einer Gehäuseöffnung bzw. Gehäusebohrung 5 versenkt angeordnet. Abgedeckt und damit unzugänglich gemacht wird die Schraube 8 mittels eines erfindungsgemässen Plombierstifts 1.

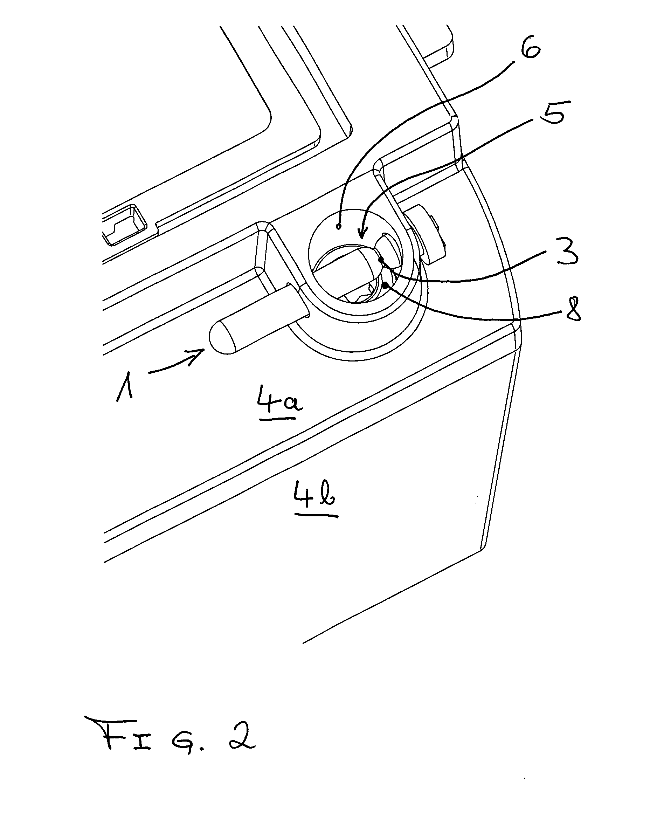

Dieser Plombierstift 1 ist in zwei Bohrungen 7 durch eine Seitenwand 6 der Gehäuseöffnung 5 gehalten, wie die Fig. 2 zeigt. Die Bohrungen 7 sind hierfür einander diametral gegenüberliegend in der Seitenwand 6 der Gehäuseöffnung 5 angeordnet, so dass der Plombierstift 1 in diese Bohrungen 7 einschiebbar ist.

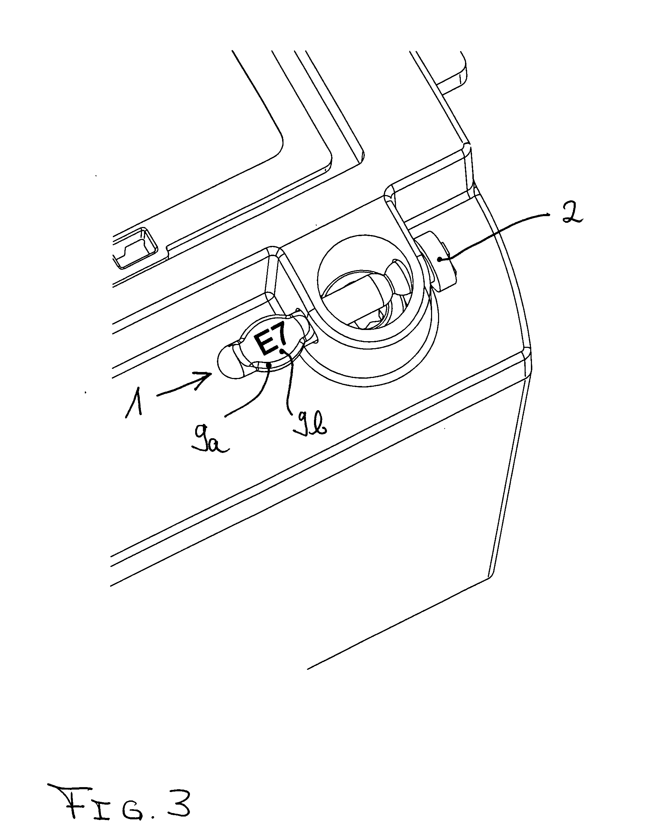

Einseitig endet der Plombierstift 1 mit einem Stiftkopf 2. Vor einem Plombiervorgang und einer damit verbundenen Fixierung des Plombierstifts 1, weist dieser eine im wesentlichen konstante Dicke auf, mit Ausnahme einer Sollbruchstelle 3, an der der Plombierstift eine entsprechende Verjüngung aufweist. Diese Sollbruchstelle 3 ist derart am Plombierstift angeordnet, dass sie innerhalb der Gehäuseöffnung 5 sichtbar ist, wenn der Plombierstift 1 fixiert ist. Somit ist der Stiftkopf 1 des fixierten Plombierstifts 1 auf der einen Seite einer Bohrung 7 angeordnet, während die Sollbruchstelle 3 und die plastische Verformung 9a der Plombierung auf der anderen Seite dieser Bohrung 7 liegt, wie Fig. 3 offenbart.

Die Gehäuseöffnung 5 bildet für die Sollbruchstelle 3 des Plombierstifts 1 ein Überwachungsfenster, welches klein genug ist, um vor einer unberechtigten Manipulation zu schützen, und darüber hinaus bei dennoch erfolgter Manipulation ein äusserst einfaches Erkennen ermöglicht. Es kann nämlich als unmöglich angesehen werden, den Plombierstift 1 durch Zerstören der Sollbruchstelle 3 zu entfernen, und anschliessend denselben Plombierstift 1 repariert in diesem Überwachungsfenster anzuordnen, ohne dass ein einfacher Kontrollblick diese betrügerische Massnahme unmittelbar offen legen würde.

Eine weitere Verbesserung der Überprüfbarkeit der Plombierung ergibt sich, wenn der Plombierstift 1 aus einem transparenten Kunststoff gefertigt ist; der transparente Plombierstift 1 erlaubt dann nämlich ebenfalls eine Überprüfung des durch ihn abgedeckten Befestigungselements 8.

Die plastische Verformung 9a des Plombierstifts 1 ist mit einem Prägestempelung 9b versehen. Da die plastische Verformung 9a eine Vorderseite und eine Rückseite umfasst, zeigt die Vorderseite das eingeprägte Prüfdatum und die Rückseite eine Kennung der prüfenden Behörde.

Ohne den Erfindungsgedanken zu verlassen, sind weitere Ausgestaltungen denkbar im Rahmen fachmännischen Handelns. Es ist beispielsweise unerheblich, ob die Gehäuseöffnung 5 als runde Bohrung ausgeführt ist oder nicht. Auch eine eckige Gehäuseöffnung ist denkbar, die dann zum Beispiel Zugang zu einem Rastelement als Gehäusebefestigungselement 8 schafft.

Im Sinne der Erfindung liegt ebenfalls die Ausführung des Plombierstift 1 mit kreisrundem, eckigem oder einem anders geartetem Querschnitt, zum Beispiel mit einer Nut zwecks Codierung. Dabei ist es auch möglich, den Plombierstift aus einem opaken Kunststoff herzustellen oder einem Metall oder einer Metalllegierung.

Selbstverständlich ist es auch möglich, den Plombierstift 1 lediglich in einer einzigen Bohrung 7 gehaltert anzuordnen.

Die erfindungsgemässe Plombierung kann im übrigen an allen vor unberechtigter Manipulation zu schützenden Gehäusen oder Räumen zum Einsatz gelangen. Typische Installationen sind Zählergehäuse für Elektrizitätszähler, Gaszähler, Wärmezähler und dergleichen.

### BEZUGSZEICHENLISTE

- 1: Plombierstift
- 2: Stiftkopf
- 3: Sollbruchstelle
- 4a, 4b: Gehäuseteile
- 5: Gehäuseöffnung
- 6: Seitenwand der Gehäuseöffnung 5
- 7: Bohrung in Seitenwand 6
- 8: Gehäusebefestigungselement, Schraube
- 9a: plastische Verformung
- 9b: Prägestempelung

## Patentansprüche

1. Plombierung für ein Gehäuse, insbesondere ein Zählergehäuse für Elektrizitätszähler, Gaszähler, Wärmezähler oder dergleichen,
**dadurch gekennzeichnet,**
**dass** ein Plombierstift (1) eine Gehäuseöffnung (5) derart abdeckt, dass ein durch die Gehäuseöffnung (5) zugängliches Gehäusebefestigungselement (8) unbedienbar ist, wobei der Plombierstift (1) eine Sollbruchstelle (3) aufweist, die innerhalb der Gehäuseöffnung (5) sichtbar ist.

2. Plombierung nach Anspruch 1,
**dadurch gekennzeichnet,**
**dass** die Gehäuseöffnung (5) mindestens eine Seitenwand (6) aufweist, die mit mindestens einer für die Aufnahme des Plombierstifts (1) vorgesehenen Bohrung (7) versehen ist.

3. Plombierung nach Anspruch 2,
**dadurch gekennzeichnet,**
**dass** die mindestens eine Seitenwand (6) der Gehäuseöffnung (5) zwei einander gegenüberliegende Bohrungen (7) aufweist, wobei die Sollbruchstelle (3) zwischen diesen Bohrungen (7) sichtbar in der Gehäuseöffnung (5) angeordnet ist.

4. Plombierung nach einem der Ansprüche 1 bis 3,
**dadurch gekennzeichnet,**
**dass** der Plombierstift (1) aus einem Kunststoff, einem Metall oder einer Metalllegierung besteht.

5. Plombierung nach einem der Ansprüche 1 bis 3,
**dadurch gekennzeichnet,**
**dass** der Plombierstift (1) aus einem transparenten Kunststoff besteht, so dass das durch ihn abgedeckte Gehäusebefestigungselement (8) sichtbar ist.

6. Plombierung nach einem der vorhergehenden Ansprüche,
**dadurch gekennzeichnet,**
**dass** der Plombierstift (1) an einem Ende einen Stiftkopf (2) aufweist, und dass an dem anderen Ende der Plombierstift mittels plastischer Verformung (9a) plombierbar ist.

7. Plombierung nach Anspruch 6,
**dadurch gekennzeichnet,**
**dass** der Plombierstift (1) an der plastischen Verformung (9a) eine Prägestempelung (9b) aufweist.

8. Plombierung nach Anspruch 7,
**dadurch gekennzeichnet,**
**dass** die Prägestempelung (9b) ein Prüfdatum und/oder eine Kennung einer Plombierungsbehörde aufweist.

9. Plombierung nach einem der vorhergehenden Ansprüchen,
**dadurch gekennzeichnet,**
**dass** das Befestigungselement (8) ein Rastelement oder eine Schraube ist.
